# EUROPEAN PATENT APPLICATION

(11) **EP 1 684 518 A2**
(43) Date of publication of application: **26.07.2006**
(21) Application number: 06100614.4
(22) Date of filing: 19.01.2006
(51) Int. Cl.: H04N 7/24

(54) **Improving the set-up speed of an external device**

(30) Priority: 19.01.2005 KR 2005005081
(71) Applicant: Samsung Electronics Co., Ltd., Yeongtong-gu Suwon-city, Gyeonggi-do 442-742 (KR)
(72) Inventor: Choung, Doo-jin, Songpa-gu Seoul (KR)
(74) Representative: Walaski, Jan Filip

(57) **Abstract**

A method of increasing the set-up speed of an Anynet device includes initializing identifications (ID) of external devices coupled to a display device through a network; determining the type of each of the external devices, and allocating one of the IDs to each of the external devices according to the determined type; determining types of audio/video (A/V) signals currently output from external devices by using a defined communication protocol between the display device and the external devices; and defining external input relations between the display device and the external devices based on the determined types of currently output A/V signals.

## Description

The present invention relates to improving the set-up speed of an external device. Methods and systems consistent with the present invention relate to increasing a set-up speed of an Anynet device, and more particularly, to increasing a set-up speed of an Anynet device by analyzing a type of audio/video (A/V) signal output from an Anynet device coupled to a display device using an Anynet communication protocol, and canceling unnecessary set-up operations based on the result of the analysis.

In the related art, an Anynet is middleware that controls various digital audio and video (A/V) devices through a display device. More specifically, the Anynet provides a user interface to control the various digital A/V devices. An Anynet menu is displayed on the display device as the user interface. When a user selects one of the digital A/V devices connected to the display device through the Anynet menu displayed on the display device by using a remote controller of the display device, the selected A/V device can be controlled by using the remote controller of the display device. After selecting one of digital A/V devices through the Anynet menu, the digital A/V devices and the display device communicate with each other through a network to automatically perform necessary operations according to commands received from the user through the Anynet menu.

To use such an Anynet function, a set-up procedure for the Anynet function must be performed on the display device and the Anynet devices connected to the display device. The Anynet device is an external device supporting the Anynet function and connected to the display device. The Anynet device may be a DVD player, an A/V receiver, or a video cassette recorder.

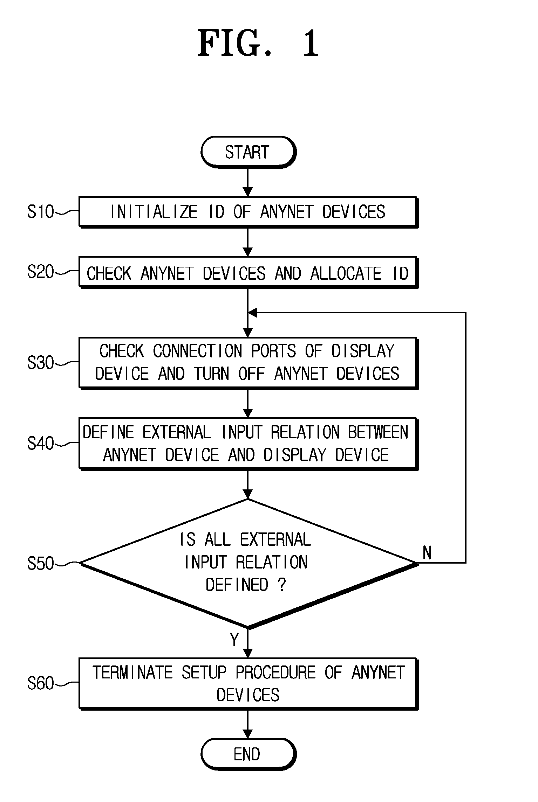

Figure 1 is a flowchart showing a related art set-up procedure of the Anynet function. At first, the Anynet devices' identifications (ID) are initialized in operation S10. A microcomputer (micom) of a display device inspects types of Anynet devices connected to the display device, and allocates a predetermined ID to each of the Anynet devices in operation S20. The micom checks connection states of Anynet devices connected to the display device, and controls the connected Anynet devices to be turned off in operation at S30.

After the turning off is performed, the micom defines external input relations between the display device and each of the Anynet devices based on the stored output signal states in operation S40.

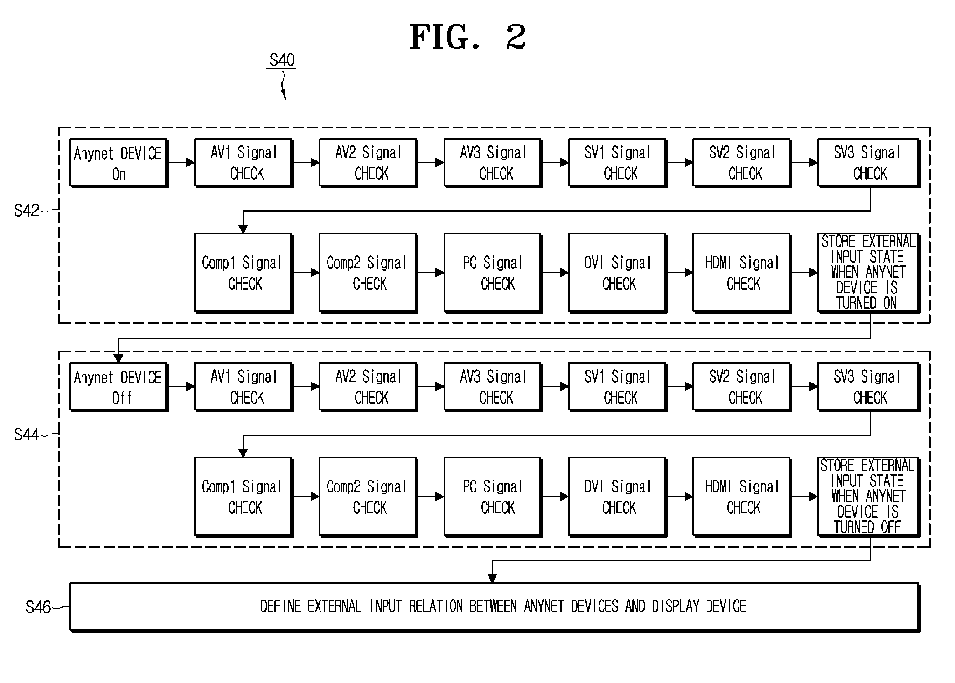

Figure 2 is a view showing detailed operations for defining the external input relations between the display device and each of the Anynet devices (i.e., operation S40). After the micom turns on one of Anynet devices connected to the display device, the micom checks output signals of the Anynet devices by shifting the input ports of the display device receiving output signals from the Anynet devices connected to the display device, and stores the turn-on states of the output signals in operation S42. For example, the micom checks output signals of the Anynet devices input through an AV1 port to an AV3, and signals input from Anynet devices through an SV1 port to an SV2. Then, the micom checks output signals of the Anynet devices input through a component 1 port and a component 2 port, and checks output signals through a personal computer (PC) port, a digital video interface (DVI) port, and a high definition multimedia interface (HDMI) port.

Then, the selected Anynet device is turned off, and the same operation as in S42 is performed in operation S44. After storing the turn-off states of the output signals of the Anynet devices, the micom defines the external input relations between the display device and the Anynet devices by comparing whether the output signals are received in the turn-on states and the turn-off states, in operation S46. That is, the micom determines whether there is a signal input through a corresponding connection port from an Anynet device.

After allocating IDs to all of the Anynet devices connected to the display device and defining external input relations between the display device and all of the Anynet devices in operation S50, the set-up procedure of the Anynet function is terminated in operation S60.

The related art set-up procedure of the Anynet function has a drawback in operations for defining the external input relation between the display device and the Anynet devices. For example, the micom of the display device must check all of signals input from all of Anynet devices connected to the display device by turning on the selected Anynet device, and the micom performs the same operation again after turning off the selected Anynet device.

The above-described related art method defines the external input relations between the display device and the Anynet devices connected to the display device by checking all of signals input from all Anynet devices before and after turning each of the Anynet devices on and off, and by comparing the turn-on input signal states and the turn-off input signal states. Accordingly, the related art Anynet set-up method requires a comparatively long set-up time.

The present invention provides a method for increasing a setup-speed of an Anynet device by canceling unnecessary set-up operations based on the analyzing result by using an Anynet communication protocol having information about types of A/V signals output from Anynet devices.

In accordance with an aspect of the present invention, there is provided a method of improving a set-up speed of an Anynet device, including: initializing identifications (ID) of external devices connected to a display device through a network; determining a type of each of the external devices, and allocating an ID to each of the external devices according to the determined type; determining types of A/V signals currently output from external devices by using a communication protocol between the display device and the external devices; and defining external input relations between the display device and the external devices based on the determined types of currently output A/V signals.

The method may further include: checking a state of the display device's connection ports connected to the external devices and transiting off the external devices between determining a type of each of the A/V signals and defining external input relations.

The step of defining external input relations may include: after transiting on an external device, determining whether the determined types of currently output A/V signals are external input signal sources of the display device as a transit-on signal-source state; after transiting off the external device, determining whether the determined types of currently output A/V signals are external input signal sources of the display device as a transit-off signal-source state; and defining the external input relations between the display device and the IDs of the external devices outputting the determined types of currently output A/V signals by comparing the transit-on signal-source state and the transit-off signal-source state.

The communication protocol may include a field in a data frame, and types of A/V signals of the external devices may be stored in the field.

The external devices may be a digital video disk (DVD) reproducer, a multifunctional reproducer having functions of a DVD reproducer and a video cassette recorder (VCR), a set-top box, a computer, and a home theater system.

The A/V signals output from external devices may be a digital video interface (DVI) signal, a high definition multimedia interface (HDMI) signal, a component signal, a super-video (S-video) signal, an audio/video (A/V) signal, and a personal computer (PC) signal.

The display device may be operated as a master and the external devices may be operated as a slave.

The above and/or other aspects of the present invention will be more apparent by describing certain exemplary embodiments of the present invention with reference to the accompanying drawings, in which:
Figure 1 is a flowchart showing a set-up procedure of Anynet function according to the related art;
Figure 2 is a view showing related art detailed operations for defining the external input relations between the display device and each of the Anynet devices;
Figure 3 is a block diagram illustrating a display device and an Anynet device communicating with each other by using an Anynet communication protocol;
Figure 4 is a flowchart showing a method for increasing a setup-speed of Anynet device by using an Anynet communication protocol in accordance with an exemplary embodiment of the present invention;
Figure 5 is a diagram depicting a data frame of an Anynet communication protocol used for setting up Anynet devices in accordance with an exemplary embodiment of the present invention;
Figure 6 is a flowchart showing an operation S450 of Figure 4; and
Figure 7 is a view illustrating an operation S450 of Figure 4 when output signals of Anynet devices are signals of a PC, a DVI, and an HDMI.

Exemplary embodiments of the present invention will be described in greater detail with reference to the accompanying drawings. In the following description, same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail for the sake of clarity and brevity.

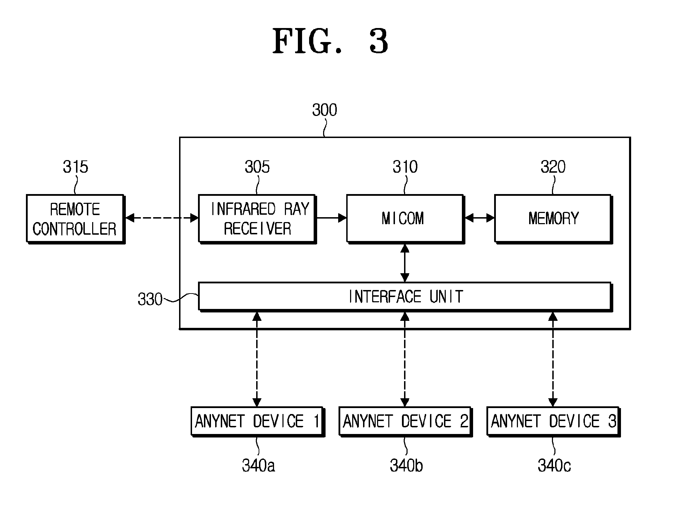

Figure 3 is a block diagram illustrating a display device and an Anynet device communicating with each other by using an Anynet communication protocol. Three Anynet devices 340A, 340B and 340C are coupled to a display device 300. However, more than three Anynet devices may be coupled to the display device.

The display device 300 includes an infrared ray receiving unit 305, a micom 310, a memory 320 and an interface unit 330. The interface unit 330 provides a communication interface between the display device 300 and the Anynet device 340A to 340C based on RS-232C. The display device 300 and the Anynet devices communicate with each other based on an Anynet communication protocol through the communication interface.

The micom 310 generally controls the display device 300. In the exemplary embodiment, the micom 310 also performs a set-up procedure on a plurality of Anynet devices 340A to 340C coupled to the display device 300. The micom 310 selects one of the Anynet devices 340A to 340C coupled to the display device 300, and transits on the selected Anynet device, for example but not by way of limitation, the Anynet device 340A. Then, the micom 310 determines whether an output signal of the selected Anynet device 340A is input as an external input signal source of the display device 300 and stores the determination result in the memory 320.

The micom 310 then transits off the selected Anynet device 340A, and determines whether an output signal of the selected Anynet device 340A is input as an external input signal source. The determination result is stored in the memory 320.

When the set-up procedure of the Anynet device is completed by the micom of the display device, the display device operates as a master device and the Anynet devices operate as slave devices to perform the Anynet function. That is, a user can control the Anynet devices 340A to 340C coupled to the display device 300 via a remote controller 315 of the display device 300. The infrared ray receiving unit 305 receives key-input signals from the remote controller 315, converts the received key-input signals to corresponding control-codes, and transfers the control-codes to the micom 310 of the display device 300.

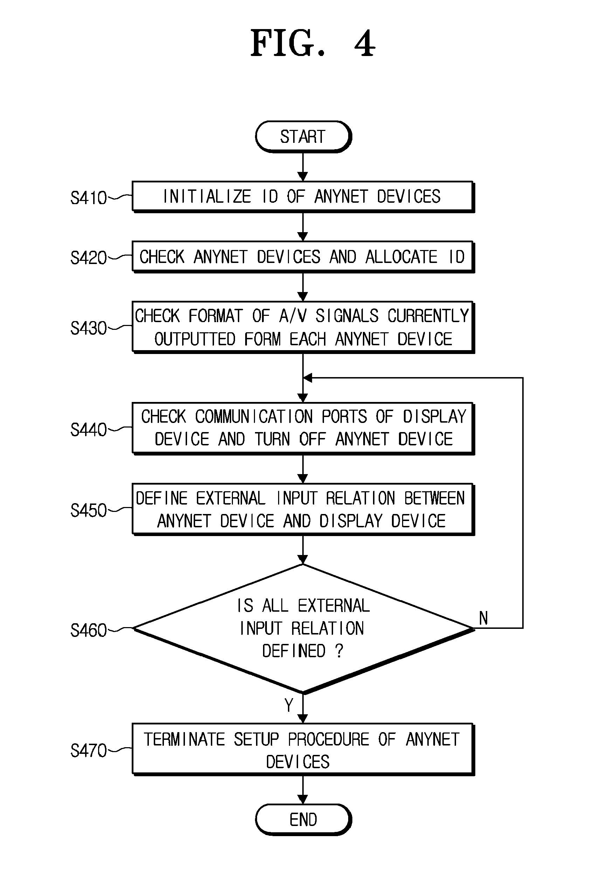

Figure 4 is a flowchart showing a method for increasing a setup-speed of an Anynet device by using an Anynet communication protocol in accordance with an exemplary embodiment of the present invention. The micom 310 of the display device 300 initializes identifications (ID) of the Anynet devices 340A to 340C coupled to the display device 300 in operation S410.

The micom 310 determines a type of each Anynet devices 340A to 340C, and allocates an ID to each of Anynet devices 340A to 340C according to the determined type in operation S420.

The micom 310 determines a type of A/V signal output from each of Anynet devices 340A to 340C by communicating with the Anynet devices 340A to 340C based on an Anynet communication protocol in operation S430.

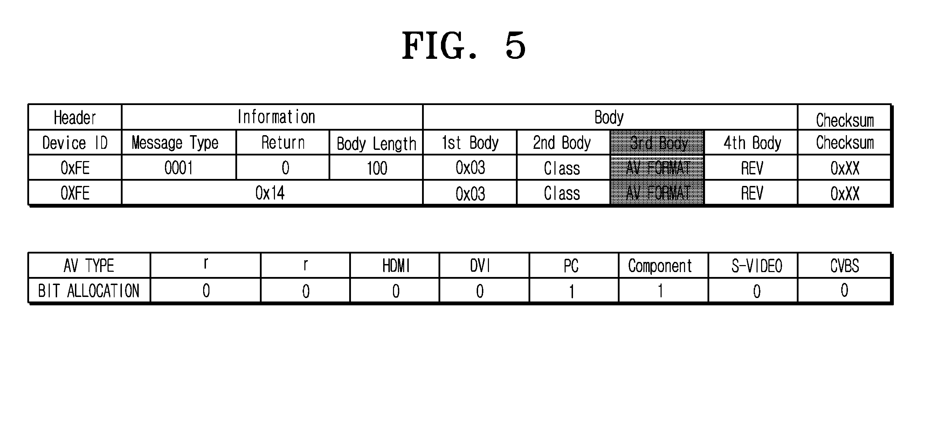

Figure 5 is a diagram depicting a data frame of an Anynet communication protocol used for setting up Anynet devices in accordance with an exemplary embodiment. The data frame of the Anynet communication protocol includes a header field, an information field, a body field, and a checksum field.

The header field stores ID information of each Anynet device 340A to 340C and the display device 300. The ID information is set to differ based on the type of the display device 300 and the Anynet devices 340A to 340C.

The information field includes information about the communication mechanism between the display device 300 and the Anynet devices 340A to 340C. The information field further includes three sub-fields. A first sub-field (Message Type) stores information about a type of transmitting message. A second sub-field (Return) stores information whether the transmitting message is responded. The third sub-field (Body length) stores information about a size of the body field containing real data.

The checksum field stores information whether the transmitting message from a transmitting side has been modified.

The body field stores real data to be exchanged between the display device 300 and the Anynet devices 340A to 340C. The body field further includes four sub-fields. Among the sub-fields, a third sub-field and a fourth sub-field are a reserved field.

In the present exemplary embodiment, information about the type of AV signal currently output from the Anynet devices 340A to 340C is also included in the third sub-field of the body field. Accordingly, the display device 300 can determine a type of AV signal currently output from the Anynet devices 340A to 340C by communicating with the Anynet device 340A to 340C. Types of AV signals output from the Anynet devices may be a DVI signal, an HDMI signal, a composite video blanking synchronization (CVBS) signal, a component signal, a S-VIDEO signal, an IEEE-1394 signal and a PC signal. However, the exemplary embodiments are not limited thereto.

After determining the type of A/V signal, the micom 310 of the display device 300 determines a connection state of communication ports of the display device 300, and controls the Anynet devices 340A to 340C coupled to the display device 300 to be transited off in operation S440.

Next, the display device 300 defines external input relations between the display device 300 and the Anynet devices 340A to 340C in operation S450.

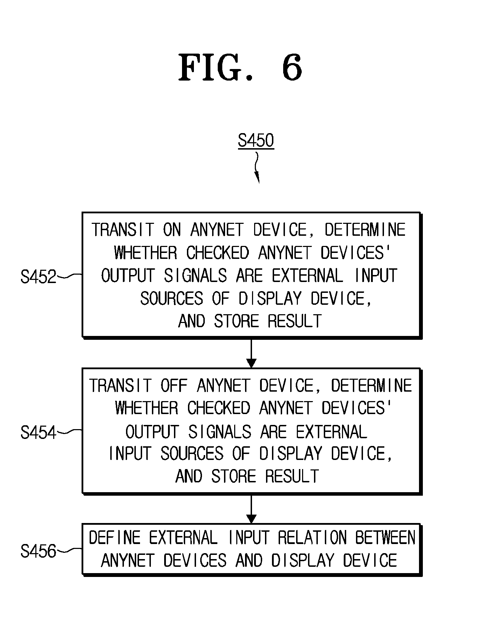

Figure 6 is a flowchart showing an operation S450 of Figure 4. The micom 310 selects and transits on one of the Anynet devices 340A to 340C coupled to the display device 300, and determines whether the determined output signal of the Anynet device in the operation S430 is an external input signal source of the display device 300. The determination result is stored in the memory 320 as a turn-on signal-source state in operation S452.

Next, the micom 310 transits off the selected Anynet device, and determines whether the determined output signal of the Anynet device in the operation S430 is an external input signal source of the display device 300. The determination result is stored in the memory 320 as a transit-off signal-source state in operation S454. Accordingly, the memory 320 includes the transit-on signal-source state which is information about external input signal source of the display device 300 when the selected Anynet device is transited on and the transit-off signal-source state information about external input signal source of the display device 300 when the selected Anynet device is transited off.

The micom 310 compares the transit-on signal-source state and the transit-off signal-source state stored in the memory 320, and defines the external input relation between the Anynet device and the display device 300 based on the comparison result in operation S456. That is, when the Anynet device is transited between the on and off positions, there is a difference generated in each external input signal of the display device 300. By using the difference, an external input signal having a difference in ON/OFF states of the Anynet device is defined as an external input of the display device 300.

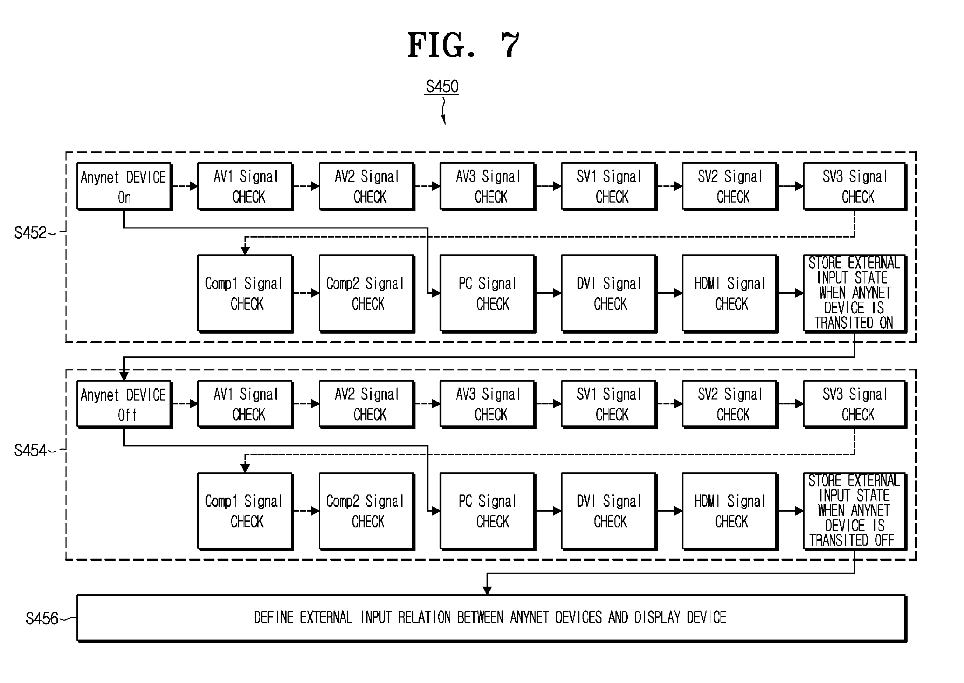

Operation S450 will be described in more detail with reference to Figure 7, which illustrates an operation S450 of Figure 4 when the determined A/V output signals of Anynet devices in the operation S430 are signals of a PC, a DVI, and a HDMI.

Referring to Figure 7, the micom 310 transits on one of the Anynet devices 430A to 430C, and determines whether the determined A/V output signals, that is, a PC signal, a DVI signal and a HDMI signal, are external input signal sources of the display device 300. The determination result is stored in the memory as a turn-on signal-source state in operation S452.

The micom 310 transits off the Anynet device, determines whether the Anynet devices' output signals checked in operation S230 (i.e., PC, DVI, and HDMI) are external input sources of the display device 300, and stores the result in operation S454. That is, the micom 310 does not determines whether an AV1 signal to an AV3 signal or component signals are external input sources of the display device 300. Therefore, less time is consumed in the exemplary embodiment compared to the related art method of setting up the Anynet devices.

The micom 310 compares the transit-on signal-source state and the transit-off signal-source state, and defines the external input relation between the display device 300 and the Anynet devices in operation S456.

Then, the micom 310 determines all of the external input relations between the display device and the Anynet devices in operation S460. If all of external input relations are defined, the set-up procedure of the Anynet function is terminated in operation S470.

In the present exemplary embodiment, information about types of AV signals currently output from Anynet devices is included in a sub-field of the data frame in the Anynet communication protocol. Accordingly, the display device can determines the types of A/V signals currently output from the Anynet devices based on the communication with the Anynet devices. After determining, the display device only checks whether the determined types of A/V signals output from the Anynet devices are the external input signal source of the display device to define the external input relations between the display device and the Anynet devices. Therefore, the setup-speed of the Anynet devices increases according to the exemplary embodiment.

Additionally, the foregoing methods of the exemplary embodiment can be implemented in a computer readable medium, or a data carrier. More specifically, the computer-readable medium includes a set of instructions (e.g., a computer program). The instructions include the steps discussed with respect to the foregoing methods. As a result, the present invention can be implemented as software, in addition to the foregoing disclosure.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A method of improving a set-up speed of an external device, the method comprising:
initializing identifications (ID) of external devices coupled to a display device through a network;
determining a type of each of the external devices, and allocating one of said IDs to each of the external devices according to the determined type;
determining types of audio/video (A/V) signals currently output from external devices by using a defined communication protocol between the display device and the external devices; and
defining external input relations between the display device and the external devices based on the determined types of currently output A/V signals.

2. The method of claim 1, further comprising checking a state of the connection ports of the display device coupled to the external devices and transiting off the external devices between the determining of said type of each of A/V signals and the defining of said external input relations.

3. The method of claim 1, wherein the defining of said external input relations comprises:
after transiting on one of said external devices, determining whether the determined types of currently output A/V signals are external input signal sources of the display device as a transit-on signal-source state;
after transiting off said one external device, determining whether the determined types of currently output A/V signals are external input signal sources of the display device as a transit-off signal-source state; and
defining the external input relations between the display device and the IDs of the external devices outputting the determined types of currently output A/V signals by comparing the transit-on signal-source state and the transit-off signal-source state.

4. The method of claim 1, wherein the defined communication protocol includes a field in a data frame, and types of A/V signals of the external devices are stored in the field of the data frame.

5. The method of claim 1, wherein the external devices comprise at least one of a digital video disk (DVD) reproducer, a multifunctional reproducer having functions of a DVD reproducer and a video cassette recorder, a set-top box, a computer, and a home theater system.

6. The method of claim 1, wherein the A/V signals output from external devices comprise at least one of a digital video interface signal, a high definition multimedia interface signal, a component signal, a super-video signal, an A/V signal, and a personal computer signal.

7. The method of claim 1, wherein the display device is operated as a master device and the external devices are operated as slave devices.

8. A system having an improved set-up speed for an external device, the system comprising:
a display device that receives a command signal from a user and includes a micom that controls said display device; and
at least one external device configured to be transited into one of an on position and an off position by said micom, wherein said at least one external device has an identification (ID) based on a type of said at least one external device, wherein external input relations between the display device and the at least one external device are determined based on determined types of audio/video (A/V) signals currently output from at least one external device by using a defined communication protocol between the display device and the at least one external device.

9. The system of claim 8, wherein a state of the connection ports of the display device coupled to the external devices is checked, and the external devices are transited off between the determining of said type of each of A/V signals and the defining of said external input relations.

10. The system of claim 8, wherein the defined communication protocol comprises a field in a data frame, said field configured to store types of A/V signals of the external devices.

11. The system of claim 8, wherein the at least one external device comprises at least one of a digital video disk (DVD) reproducer, a multifunctional reproducer having functions of a DVD reproducer and a video cassette recorder, a set-top box, a computer, and a home theater system.

12. The system of claim 8, wherein the A/V signals output from external devices comprise at least one of a digital video interface signal, a high definition multimedia interface signal, a component signal, a super-video signal, an A/V signal, and a personal computer signal.

13. The system of claim 8, wherein the display device comprises a master device and the at least one external device comprises a slave device.

14. A computer readable recording medium storing a program for improving a set-up speed of an external device, the method comprising:
initializing identifications (ID) of external devices coupled to a display device through a network;
determining a type of each of the external devices, and allocating one of said IDs to each of the external devices according to the determined type;
determining types of audio/video (A/V) signals currently output from external devices by using a defined communication protocol between the display device and the external devices; and
defining external input relations between the display device and the external devices based on the determined types of currently output A/V signals.

15. The computer readable recording medium of claim 14, further comprising checking a state of the connection ports of the display device coupled to the external devices and transiting off the external devices between the determining of said type of each of A/V signals and the defining of said external input relations.

16. The computer readable recording medium of claim 14, wherein the defining of said external input relations comprises:
after transiting on one of said external devices, determining whether the determined types of currently output audio/video (A/V) signals are external input signal sources of the display device as a transit-on signal-source state;
after transiting off said one external device, determining whether the determined types of currently output A/V signals are external input signal sources of the display device as a transit-off signal-source state; and
defining the external input relations between the display device and the IDs of the external devices outputting the determined types of currently output A/V signals by comparing the transit-on signal-source state and the transit-off signal-source state.

17. The computer readable recording medium of claim 14, wherein the defined communication protocol includes a field in a data frame, and types of A/V signals of the external devices are stored in the field of the data frame.

18. The computer readable recording medium of claim 14, wherein the external devices comprise at least one of a digital video disk (DVD) reproducer, a multifunctional reproducer having functions of a DVD reproducer and a video cassette recorder, a set-top box, a computer, and a home theater system.

19. The computer readable recording medium of claim 14, wherein the A/V signals output from external devices comprise at least one of a digital video interface signal, a high definition multimedia interface signal, a component signal, a super-video signal, an A/V signal, and a personal computer signal.

20. The computer readable recording medium of claim 14, wherein the display device is operated as a master device and the external devices are operated as slave devices.
